# EUROPEAN PATENT SPECIFICATION

(11) **EP 2 417 191 B1**
(45) Date of publication and mention of the grant of the patent: **28.08.2013**
(21) Application number: 10712951.2
(22) Date of filing: 08.04.2010
(51) Int. Cl.: C08K 3/22, C08K 5/5313

(54) **IMPROVED HALOGEN FREE FLAME RETARDANT POLYAMIDE COMPOSITION**
VERBESSERTE HALOGENFREIE FLAMMWIDRIGE POLYAMIDZUSAMMENSETZUNG
COMPOSITION AMÉLIORÉE DE POLYAMIDE IGNIFUGEANT SANS HALOGÈNE

(30) Priority: 09.04.2009 US 168035 P
(43) Date of publication of application: 15.02.2012
(73) Proprietor: Solvay Specialty Polymers USA, LLC., Alpharetta, GA 30005 (US)
(72) Inventor: NORFOLK, Linda M., Cumming GA 30041 (US); CUPTA, Glenn W., Roswell GA 30075 (US); RONEY, Charles T., Duluth GA 30097 (US)
(74) Representative: Benvenuti, Federica
(86) International application number: PCT/EP2010/054650
(87) International publication number: WO 2010/115961

(56) References cited:
- EP-A1- 1 995 280
- WO-A1-2009/009360
- US-A- 3 824 192
- US-A- 5 773 500
- US-A- 5 773 556

## Description

The present invention broadly relates to a non halogenated flame resistant polymer composition comprising a semi-aromatic polyamide. More specifically, the present invention relates to a flame resistant polymer composition comprising such a semi-aromatic polyamide featuring improved processing behavior. The invention relates also in particular to a process for the preparation of said flame resistant polymer composition, as well as to articles or parts of articles made of said composition. The invented compositions feature reduced corrosion effects on melt processing equipments.

### BACKGROUND

Semi-aromatic polyamides (like those derived from phthalic acids and aliphatic diamines, i.e. polyphthalamides, or those derived from aromatic diamines and aliphatic diacids) are polymers having excellent mechanical, physical and chemical properties which make them useful for a wide variety of different applications.

For certain end-uses, it is desirable that compositions based on these semi-aromatic polyamides, notably those comprising units derived from aliphatic diamines and aromatic diacids, be flame retarded, so as to meet UL 94 V-0 standard for high degree of flame retardance.

A method generally used to impart flame retardance to polymers involves incorporating halogenated flame retardant agents.

However, especially in the case of the high melting point semi-aromatic polyamides, halogenated flame retardants tend to thermally decompose at the molding temperature. The halogenated flame retardants degradation products (such as hydrogen halides) corrode the surfaces of the compounding extruder and impart poor surface appearance to the molded articles made there from.

Several attempts were made last decade to solve this problem.
US 5,773,500 teaches that the incorporation of calcium oxide into halogenated polyphthalamide compositions improves their thermal stability. The description of US 5,773,500 enlightens the effect of calcium, zinc and magnesium oxides by analyzing the off-gases produced by the decomposition of the blends of halogenated polyphthalamide with these oxides. Table 6 shows that hydrogen bromide and chloride are produced in high quantities when these oxides are not used while it also demonstrates a significant reduction of the production of these hydrogen halide gases when these oxides are used.

To meet the demands of current regulations and environmentally conscious manufacturers, a huge effort was made in the last years to discard the use of halogenated flame retardant. As a result, several halogen free flame retardants and halogen free flame retarded polymer compositions have been described.

Hence, halogen free flame retarded polyamide compositions, wherein the polyamide is a semi-aromatic polyamide and the flame retardant is a metal phosphinate and/or diphosphinate, alone or in combination with other synergists, are described in the prior art (see for instance US 2006/0264542 A1). Such compositions are available to the market. AMODEL^{®} HFFR-4133 and IXEF^{®} 1524 grades are commercialized by Solvay Advanced Polymers, L.L.C. Other suppliers commercialize similar grades such as Zytel^{®} HTNFR52G30NH from DuPont and Grivory^{®} HT2V-3XV0 from EMS. All these halogen free flame retarded polyamide compositions, and in particular the polyphthalamide based ones, while being very attractive because of their flame retardancy properties, suffer however from another drawback : their high melting point leads to the thermal degradation of flame retardant metal phosphinate and/or diphosphinate compounds at their processing temperature (generally above 270°C or even 300°C), thereby to the formation of decomposition products that are mainly composed of phosphinic acids and their derivatives. Therefore, they are corrosive to commonly used steels in melt processing equipment. This leads to higher maintenance costs since the melt processing equipments need to be checked regularly and parts of these equipments need to be changed frequently. This finally results in higher manufacturing costs of goods made of semi-aromatic polyamides.

Proposals have already been made to cope with this problem. Several materials were evaluated to reduce these corrosive effects but all suffer from either not reducing corrosion or significantly reducing mechanical properties of the compositions. WO 2009/009360 discloses polyamide compositions comprising a 6,T/6,6 polyamide, a phosphinate and/or diphosphinate, boehmite, glass fibers and zinc borate that have reduced corrosion effects on melt processing equipments. However, these compositions still suffer from certain drawbacks : the presence of zinc borate is preferably avoided for health issues and, in addition, the aluminium oxide boehmite has an abrasive effect that enhances the corrosion.

The Applicant has surprisingly found that the incorporation of calcium oxide into these prior art semi-aromatic polyamide compositions surprisingly reduce the corrosiveness of the composition while substantially maintaining the level of mechanical properties of the semi-aromatic polyamide.

The invention therefore provides a polymer composition comprising :
- at least one semi-aromatic polyamide having a melting point of at least 270°C ;
- at least one organophosphorous compound selected from the group consisting of a phosphinic salt, a diphosphinic salt and condensation products thereof ;
- at least 0.01 wt. %, based on the total weight of the composition, of calcium oxide.

### DETAILED DESCRIPTION

For the purpose of the present description, the term "semi-aromatic polyamide" should be understood as defining any polymer of which more than 15 mole %, preferably more than 35 mole %, still more preferably more than 50 mole % and most preferably more than 80 mole % of the recurring units, based on the total number of moles of recurring units, comprise at least one amide group (-CONH-), at least one arylene group, such as phenylene, naphthalene, p-biphenylene and metaxylylene, and at least one non aromatic group, such as an alkylene group.

Said recurring units can be obtained notably by condensation reaction between dicarboxylic acid monomer with a diamine monomer.

Preferably, the semi-aromatic polyamide is a polyphthalamide.

For the purpose of the present description, the term "polyphthalamide" should be understood as defining any polymer of which at least 35 mole %, preferably at least 50 mole % and more preferably at least 75 mole % of the recurring units, based on the total number of moles of recurring units, are formed by the polycondensation reaction between at least one phthalic acid and at least one diamine. Phthalic acids include any one of ortho-phthalic acid, isophthalic acid, terephthalic acid, and mixtures thereof. The at least one diamine is advantageously an aliphatic diamine (such as for example : hexamethylenediamine, nonanediamine, 2-methyl-1,5 pentadiamine, and 1,4-diaminobutane), preferably a C₃-C₁₂ aliphatic diamine, more preferably a C₆-C₁₂ aliphatic diamine, and still more preferably hexa-, deca- and dodecamethylenediamine. The polyphthalamide of the present invention do not comprise preferably any other recurring units than those formed by the above mentioned phthalic acid and diamine.

Suitable polyphthalamides are commercially available as AMODEL^{®} polyphthalamides from Solvay Advanced Polymers, L.L.C.

According to the present invention, the polyphthalamide is preferably a polyterephthalamide.

For the purpose of the present description, the term "polyterephthalamide" should be understood as defining any polymer of which at least 35 mole % of the recurring units, preferably at least 50 mole % and more preferably at least 75 mole % of the recurring units, based on the total number of moles of recurring units, are formed by the polycondensation reaction between terephthalic acid with at least one aliphatic diamine.

More preferably, the recurring units of the polyterephthalamide are formed by the polycondensation reaction between, on one side, terephthalic acid monomer, at least also one aliphatic dicarboxylic acid monomer and, on the other side, at least one aliphatic diamine monomer and optionally in addition isophthalic acid monomer. Advantageously, the terephthalic acid monomer (TA) and the aliphatic dicarboxylic acid monomer (AA) may be used together as a mixture in a mole ratio TA / AA comprised between 4 / 1 and 0.2 / 1, preferably between 3/1 and 0.5/1, more preferably between 2.2/1 and 0.7/1, and still more preferably between 2/1 and 1/1.

A group of preferred polyterephthalamides is polyterephthalamides consisting essentially of recurring units formed by the polycondensation reaction between terephthalic acid, at least one aliphatic dicarboxylic acid and at least one aliphatic diamine. In this embodiment, the mole ratio of the terephthalic acid and aliphatic dicarboxylic acid can be from 50 to 80 (including 55, 60, 65, 70, and 75) for the terephthalic acid and not more than 25 (including 5, 10, 15, and 20) for the aliphatic diacid. In another embodiment, the mole ratio can be from 35 to 65 for the terephthalic acid and from 30 to 60 for the aliphatic dicarboxylic acid.

Another group of preferred polyterephthalamides is polyterephthalamides consisting essentially of recurring units formed by the polycondensation reaction between terephthalic acid, isophthalic acid, at least one aliphatic dicarboxylic acid and at least one aliphatic diamine. In this embodiment, the mole ratio of the terephthalic acid and aliphatic diacid can be from 50 to 80 (including 55, 60, 65, 70, and 75) for the terephthalic acid ; from 10 to 40 (including 15, 20, 25, and 35) for the isophthalic acid ; and not more than 25 (including 5, 10, 15, and 20) for the aliphatic dicarboxylic acid. In another embodiment, the mole ratio can be from 35 to 65 for the terephthalic acid ; not more than 20 for the isophthalic acid ; and from 30 to 60 for the aliphatic diacid.

In these last two embodiments, the aliphatic dicarboxylic acid is preferably adipic acid or sebacic acid, more preferably adipic acid. Also, the aliphatic diamine comprises preferably from 3 to 12 carbon atoms (such as hexamethylene diamine, methylpentamethylene diamine and nonanediamine), more preferably from 4 to 12 and most preferably 6, 10 or 12 carbon atoms. Excellent results were obtained when hexamethylene diamine was used.

In another preferred embodiment the semi-aromatic polyamide is a polyamide with at least 50 mol. %, preferably at least 70 mol %, including up to 100 mol %, of recurring units obtained by the polycondensation reaction between terephthalic acid, isophthalic acid, adipic acid on one hand ; and at least one diamine, preferably an aliphatic one on the other hand. Within this group, the mole ratio of terephthalic/isophthalic/adipic acid can be from 50 to 80/ from 10 to 40/ not more than 25. In another embodiment the mole ratio of terephthalic/isophthalic/adipic acid can be from 35 to 65/not more than 20/ from 30 to 60. In preferred embodiments the diamine component for these acid mixtures is hexamethylene diamine.

In certain embodiments of the present invention, the dicarboxylic acid component used in forming the polyphthalamide comprises a mole ratio of aromatic dicarboxylic groups in the range from at least 50 mole % aromatic groups to 100 % aromatic groups. In a preferred embodiment of the present invention, the polyphthalamide polymer comprises from 50 mole % to 95 mole % hexamethylene terephthalamide units, from 25 mole % to 0 mole % hexamethylene isophthalamide units, and from 50 mole % to 5 mole % hexamethylene adipamide units. Particularly suitable polyphthalamides for use in the present invention are available as AMODEL^{®} A-1000, A-4000, A-5000, and A-6000 polyphthalamides from Solvay Advanced Polymers, LLC.

Of course, more than one semi-aromatic polyamide may be used in the present composition in accordance with the invention.

The melting point of the semi-aromatic polyamide of the present invention can be measured by any suitable technique known from the skilled in the art ; very often, it is measured by Differential Scanning Calorimetry, advantageously using ASTM D 3418-03. Precisely, a TA Instruments model Q20 DSC calorimeter was used by the Applicant to measure the melting point of the semi-aromatic polyamide using ASTM D 3418-03.

The melting point of the semi-aromatic polyamide is of at least 270°C, more preferably of at least 280°C, still more preferably of at least 290°C, even more preferably of at least 300°C and most preferably of at least 310°C. Besides, it is preferably of at most 370°C, more preferably of at most 365°C, still more preferably of at most 360°C and most preferably of at most 350°C.

The weight percent of the semi-aromatic polyamide in the total weight of the present composition is generally of at least 30 wt. %, preferably of at least 35 wt. %, more preferably of at least 40 wt. %, still more preferably of at least 45 wt. % and most preferably of at least 50 wt. %. Besides, the weight percent of the semi-aromatic polyamide in the total weight of the present composition is generally of at most 85 wt. %, preferably of at most 80 wt. %, more preferably of at most 75 wt. %, still more preferably of at most 70 wt. % and most preferably of at most 65 wt. %.

In a preferred embodiment, the polymer composition according to the invention comprises :
- at least one semi-aromatic polyamide of which at least 35 mole % of the recurring units are formed by the copolycondensation between terephthalic acid monomer (TA), at least one aliphatic dicarboxylic acid monomer (AA) and at least one aliphatic diamine monomer in a mole ratio TA / AA comprised between 2 / 1 and 1 / 1 ;
- at least one organophosphorous compound selected from the group consisting of a phosphinic salt, a diphosphinic salt and condensation products thereof. ;
- calcium oxide.

As mentioned, the composition in accordance with the invention comprises at least one organophosphorous compound selected from the group consisting of phosphinic salt (phosphinate) of the formula (I), a diphosphinic salt (diphosphinate) of the formula (II) and condensation products thereof. 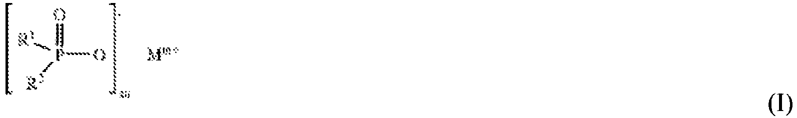 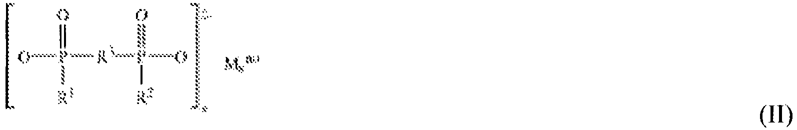 wherein : R', R² are identical or different and are C₁-C₆-alkyl, linear or branched, or aryl ; R³ is C₁ to C₁₀ alkylene, linear or branched, C₆ to C₁₀ arylene, alkylarylene or arylalkylene ; M is Mg, Ca, Al, Sb, Sn, Ge, Ti, Zn, Fe, Zr, Ce, Bi, Sr, Mn, Li, Na, K, or a protonated nitrogen base ; m is 1 to 4 ; n is 1 to 4 ; x is 1 to 4.

In formulae (I) and (II) :
M is preferably calcium, aluminum or zinc ;
the protonated nitrogen bases are preferably the protonated bases of ammonia, melamine, triethanolamine, in particular NH₄⁺ ;
R¹ and R², identical or different, are preferably C₁-C₆-alkyl, linear or branched, and/or phenyl, particularly preferably methyl, ethyl, n-propyl, isopropyl, n-butyl, tert-butyl, n-pentyl and/or phenyl.
R³ is preferably methylene, ethylene, n-propylene, isopropylene, n-butylene, tert-butylene, n-pentylene, n-octylene, or n-dodecylene. Another preferred meaning of R³ is phenylene or naphthylene.

Phosphinates are preferred as organophosphorous compound. Suitable phosphinates have been described in US 6,365,071. Particularly preferred phosphinates are aluminum phosphinates, calcium phosphinates, and zinc phosphinates. Excellent results were obtained with aluminum phosphinates. Among aluminum phosphinates, aluminium ethylmethylphosphinate and aluminium diethylphosphinate are preferred. Excellent results were in particular obtained when aluminium diethylphosphinate was used.

Synergistic combinations of the specified phosphinates with nitrogen-containing compounds which have more effective action as organophosphorous compound than the phosphinates alone in very many polymers (see e.g. US 6,365,071, US 6,207,736, US 6,509,401 are also in accordance with the invention.

The flame-retardant action of the phosphinates/diphosphinates may be improved via combination with other known flame retardants, preferably nitrogen-containing synergists, or phosphorus/nitrogen flame retardants.

The nitrogen-containing synergists preferably comprise benzoguanamine, tris(hydroxyethyl) isocyanurate, allantoin, glycoluril, melamine, melamine cyanurate, dicyandiamide, guanidine, carbodiimides.

The nitrogen-containing synergists preferably comprise condensation products of melamine. By way of example, condensation products of melamine are melem, melam, or melon, or compounds of this type with a higher condensation level, or else a mixture of the same, and, by way of example, may be prepared by the process described in US 5,985,960.

The phosphorus/nitrogen-containing synergists may comprise reaction products of melamine with phosphoric acid or with condensed phosphoric acids, or comprise reaction products of condensation products of melamine with phosphoric acid or condensed phosphoric acids, or else comprise a mixture of the specified products.

The reaction products with phosphoric acid or with condensed phosphoric acids are compounds which arise via reaction of melamine or of the condensed melamine compounds, such as melam, melem, or melon etc., with phosphoric acid. By way of example, these are dimelamine phosphate, dimelamine pyrophosphate, melamine phosphate, melamine pyrophosphate, melamine polyphosphate, melam polyphosphate, melon polyphosphate, and melem polyphosphate, and mixed polysalts, e.g. those described in US 6,121,445 and US 6,136,973.

The phosphorus/nitrogen-containing synergist may also be ammonium hydrogenophosphate, ammonium dihydrogenophosphate, or ammonium polyphosphate.

Other known flame retardant synergists may also be optionally included in the composition in accordance with the invention. Examples of such synergists include metal oxides such as silica, iron oxide, titanium oxide, aluminum oxide, magnesium oxide and the like ; metal hydroxides and hydroxides oxides such as aluminum hydroxide, boehmite, magnesium hydroxide and the like ; metal salts such as a zinc borate, zinc carbonate, magnesium carbonate, barium carbonate, barium metaborate and the like.

The weight percent of the organophosphorous compound in the total weight of the invented composition is generally of at least 5 wt. %, preferably of at least 8 wt. %, more preferably of at least 10 wt. %, still more preferably of at least 12 wt. % and most preferably of at least 13 wt. %. Besides, the weight percent of the organophosphorous compound in the total weight of the polymer composition is generally of at most 35 wt. %, preferably of at most 25 wt. %, more preferably of at most 23 wt. %, still more preferably of at most 20 wt. % and most preferably of at most 18 wt. %.

When one (or more) flame retardant synergist is also optionally included in the present composition, the weight percent of said synergist in the total weight of the composition is generally of at least 0.1 wt. %, preferably of at least 0.5 wt. %, and more preferably of at least 1 wt. %. Besides, the weight percent of said synergist in the total weight of the composition is generally of at most 10 wt. %, and preferably of at most 5 wt. %.

As mentioned above, the composition in accordance with the invention comprises also calcium oxide.

The weight percent of the calcium oxide in the total weight of the composition is generally of at least 0.01, preferably of at least 0.05, more preferably of at least 0.1, still more preferably of at least 0.12 and most preferably of at least 0.15 wt. %. Besides, the weight percent of the calcium oxide in the total weight of the polymer composition is generally of at most 5, preferably of at most 4, more preferably of at most 3, still more preferably of at most 2 and most preferably of at most 1 wt. %. Excellent results were obtained when the weight percent of the calcium oxide in the total weight of the composition was of 0.2 wt. %.

The calcium oxide of the invented composition has preferably a particle size of 1 to 5 microns. Excellent results were obtained with an average particle size of 3 microns. The purity of the calcium oxide of the invented composition is preferably superior to 95 % and more preferably superior to 95.5 %. Good results were obtained with a calcium oxide of 96 % purity.

The composition in accordance with the invention may further contain a variety of other polymers, additives, fillers, and the like, collectively called ingredients herein. Conventional ingredients of the composition include particulate fillers and nucleating agents such as talc and silica, adhesion promoters, impact modifiers, light stabilizer, compatibilizers, curing agents, lubricants, metal particles, mold release agents, organic and/or inorganic pigments like TiO₂ and carbon black, dyes, tougheners such as rubbers, plasticizers, anti-static agents, melt viscosity depressants such as liquid crystalline polymers, nucleating agents and the like.

In general, the weight of said optional ingredients, based on the total weight of the composition, is advantageously below 50 wt. %, preferably below 30 wt. %, more preferably below 15 wt. % and still more preferably below 5 wt. %.

In a particular embodiment, the composition according to the present invention may further comprise a reinforcing material, such as glass fiber, carbon fiber, polymeric fiber and mineral filler. The reinforcement material is preferably selected from glass fibers, mineral fillers and mixtures thereof.

The glass fiber used generally have a diameter of from 6 to 15 µm, preferably from 8 to 13 µm and a length-to-thickness ratio in the range from 50 to 500, preferably in the range from 150 to 400. The glass fiber may be a non-circular cross section glass fiber having a major axis lying perpendicular to a longitudinal direction of the reinforcing agent and corresponding to the longest linear distance in the cross section. The non-circular cross section has a minor axis corresponding to the longest linear distance in the cross section in a direction perpendicular to the major axis. The ratio of the length of the major axis to that of the minor access is preferably between 1.5:1 1 and 6:1. The ratio is more preferably between 2:1 and 5:1 and yet more preferably between 3:1 to 4:1. Thus, in said particular embodiment, the composition comprises from 10 to 60 wt. %, in particular from 20 to 50 wt. %, of a reinforcing agent [all percentages based on the total weight of the composition].

The mineral filler is preferably wollastonite. Thus, in said particular embodiment, the composition comprises from 10 to 50 wt. %, in particular from 20 to 40 wt. %, of a reinforcing material ingredient [all percentages based on the total weight of the composition].

The essential components of the composition along with the said optional additional ingredients may be incorporated into the semi-aromatic polyamide by a variety of different methods and procedural steps which aim to provide their thorough mixture. For example, it is possible to incorporate the above mentioned components and optional additional ingredients by mixing them into the polymer at an early stage : at the start or at the end of the polycondensation of the semi-aromatic polyamide, or in a subsequent compounding process. A certain method comprises dry mixing the essential components and optional ingredients in powder or granular form, in appropriate proportions, using e.g. a mechanical blender, such as a drum blender and the like. The mixture is then melted batchwise or in a continuous device, like extruders and the like, extruding the mixture into strands and chopping the strands into pellets. The mixture to be melted may also be prepared by well known masterbatch methods. The continuous melting device may also be fed with the components and ingredients of the composition added separately without dry premixing.

It is also an object of the present invention to provide with a process for the preparation of the polymer composition according to the present invention wherein the at least one semi-aromatic polyamide, the at least one organophosphorous compound and calcium oxide are mixed together.

The present invention also relates to shaped articles or parts of shaped articles comprising the composition.

The shaped articles according to the invention are advantageously electric or electronic parts such as electrical connectors, i.e. a conductive device for joining electrical circuits together. Electrical connectors may have various shapes and end-uses. They may be notably selected from cable connectors, single point connectors, male and female connectors, blade connectors, circular connectors, minibridges, maxibridges, pin headers, plug and socket connectors, male and female USB connectors, camera lens holders, circuit breaker housings, mobile electronic housings, battery housings ... The compositions according to the present invention are particularly well suited for the manufacture of header of the above mentioned connectors.

Another aspect of the present invention is thus related to the use of the invented polymer composition in electric or electronic applications.

The shaped articles according to the invention are advantageously formed by molding. Various molding techniques may be used to form shaped articles or parts of shaped articles from the composition. Powders, pellets, beads, flakes, reground material or other forms of the composition may be molded, with or without liquid or other additives, premixed or fed separately. In particular embodiments, the composition may be compression molded. Exact conditions may be determined by trial and error molding of small samples. Upper temperature limits may be estimated from thermal analysis such as thermogravimetric analysis. Lower temperature limits may be estimated from Tg as measured for example by dynamic mechanical thermal analysis (DMTA), differential scanning calorimetry (DSC), or like methods. The composition can be injection molded. One skilled in the art will recognize the factors influencing injection moldability including the material's stress relaxation properties and the temperature dependence of melt viscosity.

The composition can also be extruded. Non-limiting examples include angle, channel, hexagonal bar, hollow bar, I-beam, joining strip, tubes, rectangular tube, rod, sheet, plate, square bar, square tube, T-section, thin-walled tubes, microtubes, strands, rectangular strands, or other shapes as is required for a particular application. Related to extrusion is pultrusion, wherein a fiber reinforcement, such as glass or carbon fiber, is continuously added to a matrix of extruded composition at molten state ; composites with exceptional moduli and compressive strength will result.

Another aspect of the present invention is related to the use of calcium oxide to reduce the corrosive effect of halogen free semi-aromatic polyamide compositions comprising at least one organophosphorous compound, and in particular phosphinates, diphosphinates and/or condensation products thereof, while substantially maintaining their mechanical properties, and in particular their tensile properties, flammability and Izod impact. These semi-aromatic polyamide compositions comprising an organophosphorous compound feature preferably all the above described attributes of the composition according to the present invention.

The present invention is described in greater detail below by referring to the non limitative examples.

### EXAMPLES

### - Components and ingredients used :

(1) Semi-aromatic polyamide (PA1) : AMODEL^{®} A 4002, commercialized by Solvay Advanced Polymers, L.L.C. : polyphthalamide resulting from the polycondensation of, respectively, 32.5 mol % ofterephthalic acid and 17.5 mol % of adipic acid with 50 mol % of hexamethylenediamine having a melting point measured by ASTM D 3418-03 equal to 330°C ;
(2) Fiberglass : chopped fiberglass, 10 µm diameter, 4.5 mm length commercialized by Saint-Gobain Vetrotex America, Grade 983 (SGVA 983) ;
(3) Flame retardant (FR) : Exolit^{®} OP 1230, an aluminium diethylphosphinate commercialized by Clariant ;
(4) Lubricant : Linear low density polyethylene (LLDPE) GRSN-9820 commercialized by Dow Chemical;
(5) Calcium oxide, CA602 commercialized by Mississippi Lime, median particle size 3 microns ;
(6) Magnesium oxide KYOWAMAG MF-150 commercialized by Mitsui Plastics Inc. ;
(7) Zinc oxide ZINCOXYD ACTIV 44B commercialized by Rhein Chemie Corporation ;
(8) Zinc stearate commercialized by Baerlocher GmbH ;
(9) Color concentrate : CONCENTRATE, CARBON BLACK CPTA-00025759, which is a AMODEL^{®} A-1004 resin with 20 wt. % Vulcan black purchased from Clariant.

### - Preparation of the Polymer Compositions

The polymer compositions of the examples and comparative examples were prepared by melt blending in a twin screw extruder. The strands were then cooled and cut into pellets.

### - Properties of the Polymer Compositions

The polymer compositions of examples 1, 2 and 3 (according to the invention), and the polymer composition according to comparative examples C1, C2, C3, C4, C5 were tested and classified for the flame retardancy, on the basis of the UL 94 (Underwriters Laboratories) Vertical Bum test, mechanical properties by ISO 527-2 1993(E) (tensile) and ISO 180 2000(E) (impact strength). The samples were molded into 0.8 mm thick flame bars and tensile test bars. The flame bars were used for an internal UL vertical bum screening test.

Corrosion was determined by an internal molding procedure :

### Molding Corrosion test

The corrosive effect of the samples was determined by running 100 kg of each sample on a Toyo 55 molding machine equipped with a 28 mm screw. The molding machine was equipped with a check ring made of P20 steel. The outer diameter of the ring was measured prior to the test. After the sample run was completed, the screw was disassembled and cleaned. The check ring outer diameter was measured again to determine wear. The difference in diameter is reported in table 1. A new check ring was used for each sample. The melt temperature was controlled to about 335-338°C. The mold temperature was 93°C. The samples were dried before the test to less than 0.08 % moisture.

### - Results

The examples 1, 2 and 3, all according to the present invention, containing calcium oxide at different levels showed excellent behavior during the flammability tests and low corrosive effect on the check ring of the molding machine. To the contrary, example C5 without any flame retardant compound featured as expected very good mechanical properties and very low corrosive effect while being unsatisfactory concerning its flammability behavior. Example C4, showed that the incorporation of a flame retardant to the C5 composition improved the flammability behavior while increasing highly its corrosive effect. Attempts to cope this problem by the incorporation of various metallic compounds such as zinc oxide, magnesium oxide and zinc stearate (in examples C1, C2 and C3) did not solve this specific issue. Composition C3 did not contain any lubricant since the zinc stearate already acts as a lubricant. Since metallic stearates, and zinc stearate in particular, are known to act like acid scavengers, one would have expected C3 to be the best answer to the faced problem, due to the presence of Exolit^{®} and the formation of phosphinic acids and their derivatives during melt processing. However compositions C1, C2 and C3 did not satisfy at the same time the high mechanical properties, good flammability results and low corrosive effect requirements that were achieved by examples 1, 2 and 3.

**Table 1 : Polymer compositions and results**

| **EXAMPLES** | **1** | **2** | **3** | ***C1*** | ***C2*** | ***C3*** | ***C4*** | ***C5*** |
|---|---|---|---|---|---|---|---|---|
| Amodel^{®} A4002 | 51.5 | 51.3 | 50.9 | *51.3* | *51.3* | *51.4* | *51.7* | *65* |
| Fiberglass | 33 | 33 | 33 | *33* | *33* | *33* | *33* | *34.5* |
| Exolit^{®} OP1230 | 15 | 15 | 15 | *15* | *15* | *15* | *15* | - |
| LLDPE | 0.3 | 0.3 | 0.3 | *0.3* | *0.3* | - | *0.3* | *0.5* |
| Calcium oxide | 0.2 | 0.4 | 0.8 | - | - | - | - | - |
| Zinc oxide | - | - | - | *0.4* | - | - | - | - |
| Magnesium oxide | - | - | - | - | *0.4* | - | - | - |
| Zinc stearate | - | - | - | - | - | *0.6* | - | - |
| Color concentrate | - | 1.5 | 1.5 | *1.5* | *1.5* | *1.5* | *1.5* | *1.5* |
| | | | | | | | | |
| Tensile Strength (MPa) | 155 | 140 | 137 | *118* | *83* | *144* | *147* | *200* |
| Tensile Elongations (%) | - | 1.7 | 1.7 | *1.3* | *0.8* | *1.8* | *1.9* | *1.8* |
| Tensile Modulus (MPa) | - | 11900 | 11200 | - | - | *12000* | *12700* | *12700* |
| Izod Impact (kJ/sqm) | - | 9 | 7 | - | - | - | *7* | - |
| Flammability | **V-0** | **V-0** | **V-0** | *V-1* | *V-1* | *V-0* | *V-0* | *HB* |
| Change in Ring OD (mm) | **0.14** | **0.13** | **0.10** | - | - | *0.22* | *0.20* | *0.07* |

| | | | | | | | | |
|---|---|---|---|---|---|---|---|---|
| **V-0** : burning stops within 10 seconds on a vertical specimen ; no drips allowed. **V-1**: burning stops within 30 seconds on a vertical specimen ; no drips allowed. **HB**: slow burning on a horizontal specimen ; burning rate < 76 mm/min. | | | | | | | | |

## Claims

1. Polymer composition comprising :
- at least one semi-aromatic polyamide having a melting point of at least 270°C ;
- at least one organophosphorous compound selected from the group consisting of a phosphinic salt, a diphosphinic salt and condensation products thereof;
- at least 0.01 wt. %, based on the total weight of the composition, of calcium oxide.

2. The polymer composition according to claim 1, wherein it contains from 30 to 85 wt. % of the at least one semi-aromatic polyamide, based on the total weight of the composition.

3. The polymer composition according to any one of the preceding claims, wherein it contains from 5 to 25 wt. % of the at least one organophosphorous compound, based on the total weight of the composition.

4. The polymer composition according to any one of the preceding claims, wherein it contains from 0.05 to 3 wt. % of calcium oxide, based on the total weight of the composition.

5. The polymer composition according to claim 4, wherein it contains from 0.15 to 1 wt. % of calcium oxide, based on the total weight of the composition.

6. The polymer composition according to any one of the preceding claims, wherein the organophosphorous compound is a phosphinate.

7. The polymer composition according to claim 6, wherein the phosphinate is aluminium diethylphosphinate.

8. The polymer composition according to any one of the preceding claims, wherein it further comprises a reinforcement material.

9. The polymer composition according to claim 8, wherein the reinforcement material is selected from glass fibers, mineral fillers and mixtures thereof.

10. The polymer composition according to claim 9, wherein the glass fiber is a non-circular cross section glass fiber and the mineral filler is wollastonite.

11. Process for the preparation of the polymer composition according to any one of the preceding claims, wherein the at least one semi-aromatic polyamide, the at least one organophosphorous compound and calcium oxide are mixed together.

12. Use of the polymer composition according to any one of claims 1 to 10 in electric or electronic applications.

13. Article comprising the polymer composition according to any one of claims I to 10.

14. Article according to claim 13 wherein it is a connector.

15. Use of calcium oxide to reduce the corrosive effect of halogen free semi-aromatic polyamide compositions comprising phosphinates, diphosphinates and/or condensation products thereof.

## Patentansprüche

1. Polymerzusammensetzung, umfassend :
- mindestens ein teilaromatisches Polyamid mit einem Schmelzpunkt von mindestens 270°C ;
- mindestens eine Organophosphorverbindung aus der Gruppe bestehend aus einem Phosphinsäuresalz, einem Diphosphinsäuresalz und Kondensationsprodukten davon ;
- mindestens 0,01 Gew.- %, bezogen auf das Gesamtgewicht der Zusammensetzung, Calciumoxid.

2. Polymerzusammensetzung nach Anspruch 1, wobei sie 30 bis 85 Gew.- % des mindestens einen teilaromatischen Polyamids, bezogen auf das Gesamtgewicht der Zusammensetzung, enthält.

3. Polymerzusammensetzung nach einem der vorhergehenden Ansprüche, wobei sie 5 bis 25 Gew.- % der mindestens einen Organophosphorverbindung, bezogen auf das Gesamtgewicht der Zusammensetzung, enthält.

4. Polymerzusammensetzung nach einem der vorhergehenden Ansprüche, wobei sie 0,05 bis 3 Gew.- % Calciumoxid, bezogen auf das Gesamtgewicht der Zusammensetzung, enthält.

5. Polymerzusammensetzung nach Anspruch 4, wobei sie 0,15 bis 1 Gew.- % Calciumoxid, bezogen auf das Gesamtgewicht der Zusammensetzung, enthält.

6. Polymerzusammensetzung nach einem der vorhergehenden Ansprüche, wobei es sich bei der Organophosphorverbindung um ein Phosphinat handelt.

7. Polymerzusammensetzung nach Anspruch 6, wobei es sich bei dem Phosphinat um Aluminiumdiethylphosphinat handelt.

8. Polymerzusammensetzung nach einem der vorhergehenden Ansprüche, wobei sie ferner ein Verstärkungsmaterial umfasst.

9. Polymerzusammensetzung nach Anspruch 8, wobei das Verstärkungsmaterial aus Glasfasern, Mineralfüllstoffen und Mischungen davon ausgewählt ist.

10. Polymerzusammensetzung nach Anspruch 9, wobei es sich bei der Glasfaser um eine Glasfaser mit nicht kreisrundem Querschnitt handelt und es sich bei dem Mineralfüllstoff um Wollastonit handelt.

11. Verfahren zur Herstellung der Polymerzusammensetzung nach einem der vorhergehenden Ansprüche, bei dem man das mindestens eine teilaromatische Polyamid, die mindestens eine Organophosphorverbindung und Calciumoxid zusammenmischt.

12. Verwendung der Polymerzusammensetzung nach einem der Ansprüche 1 bis 10 bei elektrischen oder elektronischen Anwendungen.

13. Gegenstand, umfassend die Polymerzusammensetzung nach einem der Ansprüche 1 bis 10.

14. Gegenstand nach Anspruch 13, bei dem es sich um einen Verbinder handelt.

15. Verwendung von Calciumoxid zur Verringerung der korrosiven Wirkung von halogenfreien, teilaromatisches Polyamid enthaltenden Zusammensetzungen, die Phosphinate, Diphosphinate und/oder Kondensationsprodukte davon umfassen.

## Revendications

1. Composition polymère comprenant :
- au moins un polyamide semi-aromatique ayant un point de fusion d'au moins 270°C ;
- au moins un composé organophosphoré sélectionné dans le groupe constitué d'un sel phosphinique, d'un sel diphosphinique et de produits de condensation de ceux-ci ;
- au moins 0,01 % en poids, relativement au poids total de la composition, d'oxyde de calcium.

2. Composition polymère selon la revendication 1, contenant de 30 % à 85 % en poids dudit au moins un polyamide semi-aromatique, relativement au poids total de la composition.

3. Composition polymère selon l'une quelconque des revendications précédentes, contenant de 5 % à 25 % en poids dudit au moins un composé organophosphoré, relativement au poids total de la composition.

4. Composition polymère selon l'une quelconque des revendications précédentes, contenant de 0,05 % à 3 % en poids d'oxyde de calcium, relativement au poids total de la composition.

5. Composition polymère selon la revendication 4, contenant de 0,15 % à 1 % en poids d'oxyde de calcium, relativement au poids total de la composition.

6. Composition polymère selon l'une quelconque des revendications précédentes, dans laquelle le composé organophosphoré est un phosphinate.

7. Composition polymère selon la revendication 6, dans laquelle le phosphinate est le diéthylphosphinate d'aluminium.

8. Composition polymère selon l'une quelconque des revendications précédentes, comprenant en outre un matériau de renforcement.

9. Composition polymère selon la revendication 8, dans laquelle le matériau de renforcement est sélectionné parmi des fibres de verre, des charges minérales et des mélanges de celles-ci.

10. Composition polymère selon la revendication 9, dans laquelle la fibre de verre est une fibre de verre à section transversale non circulaire et la charge minérale est la wollastonite.

11. Procédé de fabrication de la composition polymère selon l'une quelconque des revendications précédentes, dans lequel ledit au moins un polyamide semi-aromatique, ledit au moins un composé organophosphoré et l'oxyde de calcium sont mélangés les uns avec les autres.

12. Utilisation de la composition polymère selon l'une quelconque des revendications 1 à 10 dans des applications électriques ou électroniques.

13. Article comprenant la composition polymère selon l'une quelconque des revendications 1 à 10.

14. Article selon la revendication 13, lequel est un connecteur.

15. Utilisation d'oxyde de calcium pour réduire l'effet corrosif de compositions de polyamides semi-aromatiques sans halogènes comprenant des phosphinates, des diphosphinates et/ou des produits de condensation de ceux-ci.
